# EUROPEAN PATENT SPECIFICATION

(11) **EP 1 344 801 B1**
(45) Date of publication and mention of the grant of the patent: **12.04.2006**
(21) Application number: 03005718.6
(22) Date of filing: 13.03.2003
(51) Int. Cl.: C09D 5/08, C10M 169/04, C10M 101/02, C10M 101/04, C10M 105/22, C10M 105/32, C10M 105/72, C10M 125/10, C10M 125/30, C10M 129/58, C10M 129/68, C10M 135/10, C10M 159/06

(54) **Rustproofing composition**
Rostschutzzusammensetzung
Composition d'anti-rouille

(30) Priority: 15.03.2002 JP 2002071643
(43) Date of publication of application: 17.09.2003
(73) Proprietor: HONDA GIKEN KOGYO KABUSHIKI KAISHA, Minato-ku, Tokyo 107-8556 (JP)
(72) Inventor: Ueki, Mitsuhiko, 4-1 Chuo, Wako-shi, Saitama-ken 351-0193 (JP); Suzuki, Eiji, 4-1 Chuo, Wako-shi, Saitama-ken 351-0193 (JP); Takeuchi, Toshihiro, 4-1 Chuo, Wako-shi, Saitama-ken 351-0193 (JP); Takehara, Shinji, 4-1 Chuo, Wako-shi, Saitama-ken 351-0193 (JP)
(74) Representative: Böhm, Brigitte

(56) References cited:
- DD-A- 137 124
- FR-A- 2 633 947
- GB-A- 639 814
- US-A- 4 718 942
- DATABASE WPI Derwent Publications Ltd., London, GB; AN 1997-098589, XP002245344 & RU 2 061 723 C (NOVOUFA OIL REFINERY) 10 June 1996
- DATABASE WPI Derwent Publications Ltd., London, GB; AN 1994-005175 XP002245345 & SU 1 781 261 A (ATOMKOTLOMASH SCI PRODN ASSOC), 15 December 1992 (1992-12-15)

## Description

### BACKGROUND OF THE INVENTION

### Technical Field

The present invention relates to rustproofing composition which is applied to parts for car bodies and pocket structure parts in vehicles, in particular in automobiles, and relates to rustproofing compositions which can be used for long-term rustproofing for common metallic materials.

### Background Art

As a rustproofing agent for parts around tires, pocket structure parts, and plate-bonded parts, a rustproofing agent in which wax and several kinds of additives are dissolved or dispersed in organic solvents such as mineral spirits, that is, wax-type rustproofing agents, have been used. As these compositions exhibit high rustproofing ability, these compositions are also used as long-term rustproofing agents for metallic materials outdoors.

As a conventional wax-type rustproofing agent, for example, compositions which improve coating ability are disclosed in Japanese Unexamined Patent Application Publication No. 40159/ 85 or No. 92267/ 89, and a composition which improves production technology is disclosed in Japanese Unexamined Patent Application Publication No. 55198/ 86.

GB-Patent 639,814 A relates to an anti-corrosion oil comprising mostly hydrocarbon oils and minor proportions of a petroleum residue, a corrosion-protective agent, an alkali metal salt of an oil-soluble naphtasulfonic acid and an aliphatic alcohol containing not more than 8 carbon atoms in the molecule.

In particular, Example 2 of GB 639814 A discloses an anti-corrosion oil comprising as volatile components white spirit as a main content of 50%, special boiling spirit with a content of 10% and diacetone alcohol with a content of 2%, i.e. together 62% of volatile content.

Document DD 137 124 A relates to an anti-corrosion composition containing inter alia, a solvent, and, as shown in Examples 1-5 of D2, the solvent is 60-92.5 mass% of n-paraffin or white spirit of the entire composition.

Document FR 2 633 947 A relates to an anti-corrosion composition containing a petroleum solvent which consists mostly of aliphatic petroleum fractions and also of aromatic compounds less than 5%.

Document US 4,718,942 A relates to corrosion-inhibiting coating compositions including, among other things, volatile organic solvent based systems and mixed volatile organic solvent - nonvolatile mineral oil-based system. In particular, Examples E), F), G), K) and L) disclose volatile mineral spirit for 25 mass% as a solvent.

Database WPI Derwent Publications Ltd., AU 2061 723 A, 1996 concerns a polishing and anti-corrosion composition containing ligroin or residual fractions from the distillation of benzene or mixtures thereof for 60 to 70 mass% as a volatile solvent.

Database Derwent Publications Ltd., SU 1 781 261 A, 1992 discloses an anti-corrosive coating composition comprising 42.4 to 84.4 wt.-% water and 5 to 15 wt.-% solvent, white spirit or a 1:1 mixture of them.

However, in these compositions, organic solvents such as mineral spirits are used as solvents for dilution and dispersion. There are cases in which more than 70 mass% of such solvents is contained. Therefore, the organic solvent in the compositions are evaporated into the air to form the wax coating which is a half hard coating after the compositions are applied. As such evaporated organic solvents are recently considered to be one of the causes of global warming, research to reduce organic solvents which are used in coatings is often performed and movements to regulate the amount of volatile organic solvent by law are increasing.

However, in the case in which organic solvents evaporated from the wax-type rustproofing agents are simply reduced, the viscosity of the agent is increased and sufficient permeation into gaps cannot be obtained. Therefore, 80 mass% of non-volatile content was a limit to maintain sufficient permeation in conventional technology. Furthermore, as a method to reduce organic solvents evaporated from the wax-type rustproofing agent, a method in which the organic solvent used in the compositions is substituted by high-viscosity oil having low volatilization was examined. However, in this method, the coated film did not dry, the coated film flowed off under high temperatures or vibrations, the coated film was easily removed by a physical force such as contact with water, and sufficient rustproofing ability could not be obtained.

In addition, as a method to reduce organic solvent, a method in which water-based rustproofing component is used was suggested. However, in the case the water-based rustproofing agents coated on pocket structure parts of car bodies or plate-bonded parts, water which was contained in permeated compositions could not be evaporated, generating rust. Furthermore, a rust preventing method in which wax composition of solid state in normal temperatures is heated to melt and is coated by insuccation, or a rust preventing method in which melted wax is used, was developed. However, such methods require large-scale equipment, and large amounts of heat energy are required to melt the solid wax. These methods have problems in cost efficiency.

### Summary of the Invention

Therefore, an object of the present invention is to provide a rustproofing composition which can meet required rustproofing quality and workability for parts around tires, pocket structure parts, and plate-bonded parts of car bodies, and which is good for the environment, containing volatile organic solvent of not more than 10 mass%. Specifically, the object is to provide a rustproofing composition which has low viscosity, sufficient permeability, superior rustproofing ability, and which can form a dry flexible coating after a coating treatment.

The inventors noted that despite the fact that drying oil, among oils and fats, is liquid under normal temperatures, dry coating can be formed by oxidation polymerization if the dry oil is brought into contact with air. They succeed in development of a wax-type rustproofing composition in which desired flexible coating can be formed without using volatile organic solvents by mixing the drying oil into coating agents or solvents having low volatility.

Therefore, the rustproofing composition of the present invention comprises:
at least one kind of drying oil selected from fats and oils having an iodine value of not less than 130 for 10 to 60 mass% of the entirety of the composition;
at least one kind of wax selected from natural waxes and synthetic waxes and/or at least one kind of rustproofing additive selected from sulfonates, carboxylic acid salts, fatty acid esters, amine salts, oxide paraffin salts, and oxide wax salts for 1 to 50 mass% of the entirety of the composition;
wherein the drying oil, the wax, and the rustproofing additive are dissolved or dispersed in at least one kind of solvent selected from mineral oil base lubricant base oils, synthetic lubricant oil base materials, liquid saturated hydrocarbon mixtures, vegetable oil base semi-drying oils and vegetable oil base non-drying oils, and wherein non-volatile content at 105°C for 3 hours is not less than 90 mass%.

In a preferred embodiment, the rustproofing composition of the present invention comprises:
at least one kind of drying oil selected from fats and oils having an iodine value of not less than 130 for 10 to 60 mass% of the entirety of the composition;
at least one kind of wax selected from natural waxes and synthetic waxes and/or at least one kind of rustproofing additive selected from sulfonates, carboxylic acid salts, fatty acid esters, amine salts, oxide paraffin salts, and oxide wax salts for 1 to 50 mass% of the entirety of the composition;
wherein the drying oil, the wax, and the rustproofing additive are dissolved or dispersed in at least one kind of solvent selected from mineral oil based lubricant base oils, synthetic lubricant oil base materials, and liquid saturated hydrocarbon mixtures, and wherein nonvolatile content at 105°C for 3 hours is not less than 90 mass%.

In the present invention, long-term rustproofing effects can be obtained which are similar to those of rustproofing wax which contains conventional organic solvents. Furthermore, not only can the same method be used as for the conventional wax, but also it is effective for reducing global warming because the volatile organic solvent content is lower. In addition, hardening reaction by oxidation polymerization is applied to the rustproofing composition of the present invention. In the case in which the rustproofing composition is coated on plate-bonded parts of pocket structure parts, for example, it remains undried because contact with air is insufficient inside. Therefore, it efficiently follows the contortions of car bodies in running. As a result, long-term rustproofing effects can be expected.

Furthermore, because wax which adheres to painted surfaces may stain the painting in the case in which wax which contains conventional solvent is used, the wax which adhered under carrying or manufacturing must be removed immediately. However, the rustproofing composition of the present invention never stains paint because no solvent is contained. Therefore, no removing process is required.

Next, the rustproofing composition of the present invention is further explained in detail.

Drying oils which can be used in the present invention are oils and fats having an iodine value not less than 130. Specifically, linseed oil, perilla oil, tung oil, hempseed oil, safflower oil, oiticica oil, sardine oil, herring oil, dehydrated castor oil in which castor oil is dehydrated to produce conjugated acid, or synthetic drying oil can be used. It is desirable that in particular among these oils, linseed oil, tung oil and dehydrated castor oil which can be obtained be used singly or in mixtures. It is more desirable that the contained amount of dehydrated castor oil be greater. In the present invention, the contained amount of drying oils is in a range of 10 to 60 mass% of the entirety of the composition, and desirably in a range of 30 to 40 mass%. In the case in which the contained amount is less than 10 mass%, sufficient drying property of the rustproofing composition coating cannot be obtained, and as a result, forms undesirable insufficiently drying coating. On the other hand, in the case in which the contained amount is more than 60 mass%, coating of the rustproofing composition after drying becomes too hard, superior corrosion resistance by a flexible coating which is a characteristic of the rustproofing wax cannot be obtained.

As waxes of the present invention, vegetable oil based waxes such as candelilla wax, carnauba wax, rice wax, haze wax, or jojoba wax, animal oil based waxes such as bees wax, lanolin wax, or spermaceti wax, mineral oil based waxes such as montan wax, ozokerite or ceresin wax, petroleum wax such as paraffin wax, microcrystallin wax, or petrolatum can all be used as natural waxes.

As synthetic waxes available in the present invention, synthetic hydrocarbons such as Fischer-Tropsch wax, or polyethylene wax, denatured wax such as montan wax derivatives, paraffin wax derivatives, or microcrystallin wax derivatives, hydrogenated waxes such as hardened castor oil, hardened castor oil derivatives, fatty acid such as 12-hydroxy stearic acid, acid amides such as stearic acid amide, esters such as phthalic anhydride imide, or chlorohydrocarbon, or mixed waxes in which these waxes are mixed can be used. These waxes can be used singly or in mixed condition. It is desirable that the melting point of the waxes be in a range of 60°C to 130°C, more desirably in a range of 80°C to 100°C. In the case in which the melting point is less than 60°C, dripping occurs under high temperatures in summer before being dried if the wax is coated inside a car body. On the other hand, in the case in which the melting point is more than 130°C, production processes of the composition require high temperatures and it becomes difficult to use it in practice.

Specifically, it is desirable that paraffin wax, microcrystalline wax; petrolatum, polyethylene wax and each kinds of denatured wax be used singly or in mixed condition.

Furthermore, in the present invention, rustproofing additives selected from sulfonates, carboxylic acid salts, fatty acid esters, amine salts, oxide paraffin salts, and oxide wax salts can be used instead of the waxes described above to obtain similar effects. Although there are rustproofing additives which are diluted by organic solvent beforehand, rustproofing additives having low content of volatile components are desirable for use in the present invention. Specifically, oil-reduced sulfonate, fatty acid esters, oxide paraffin salts are desirable. It is more desirable that oil reduced calcium sulfonate salt and fatty acid esters be used singly or in mixtures. In the present invention, a coated film can be made water-repellant by adding waxes or rustproofing additives. At the same time, efficient corrosion resistance can be obtained by forming precise continuous coated films. Furthermore, it is possible to control viscosity by using crystallization of wax. The contained amount of waxes and rustproofing additives of the present invention is in a range of 1 to 50 mass% of the entirety of the composition, and is desirably in a range of 10 to 30 mass%. It is desirable that the contained amount of a material having high crystallinity be relatively low. On the other hand, it is desirable that the contained amount of material having low crystallinity be relatively high. If the contained amount is less than 1 mass%, sufficient corrosion resistance cannot be obtained. On the other hand, if the contained amount is more than 50 mass%, the viscosity becomes too high to reduce workability, and it becomes difficult to coat uniformly.

In the present invention, solvent is added to control viscosity desirably by dissolving or dispersing each component, it can be selected from mineral oil based lubricant base oils, synthetic lubricant base agents, liquid saturated hydrocarbon mixtures, vegetable oil base semi-drying oils, or vegetable oil based non-drying oils. Specifically, paraffin based lubricant base oil or naphtalene based lubricant base oil
as the mineral oil based lubricant base oil, ester based, poly-α-olefin based, polyalkyleneglycol based, polybutene based, or alkyldiphenylether based as the synthetic lubricant base oil, liquid paraffin as the liquid saturated hydrocarbon mixture, soybean oil, cottonseed oil, rapeseed oil, rice oil, sesame oil, sunflower
oil, or com oil as the vegetable oil based semi-drying oil, or olive oil, arachis oil, or tsubaki oil as vegetable oil based non-drying oil can be used singly or in mixed condition.

Solvents such as vegetable oil based semi-drying oils and vegetable based non-drying oils include many double bonds in their molecules, from the viewpoint of long-term stability, mineral oil based lubricant base oils, synthetic lubricant base oils, or liquid saturated hydrocarbon mixtures are desirable. Furthermore, in the present invention, oil having low volatility is desirable. Specifically, it is desirable that the volatilized amount at 105°C over 3 hours be not more than 5 mass%, more desirably not more than 1 mass%.

Furthermore, in the rustproofing composition of the present invention, the hardness of the coating film can be controlled within a range which satisfies required quality, and pigments or fillers can be added to give thixotropy to improve dripping property. As the added pigment, red iron oxide, zinc powder, or zinc phosphate, and other conventional various kinds of pigments can be used. As the added filler, kinds of calcium carbonate, kinds of kaolin clay, kinds of talc, kinds of mica, kinds of bentonite, or other conventional extender pigments can be used. Furthermore, coloring pigments such as carbonblack or titanium oxide can be added to perform coloring.

In the rustproofing composition of the present invention, hardening accelerator can be added to improve or to control drying speed, and anti-skinning agents can be added to prevent surface hardening. As the hardening accelerator, cobalt naphthenate, manganese naphthenate, or other conventional additives can be used. As the anti-skinning agent, butylated hydroxytoluene or other conventional kinds of additives can be used.

The rustproofing composition of the present invention can form efficient rustproofing skins for parts around tires, pocket structure parts, plate bonded parts of car bodies by spray coating such as airless spray or air spray with conventional spray machines, by flow coating under a shower, or by direct coating with brush. It is desirable that thickness of coated film be not less than 30 µm in the case of long-term rustproofing.

### Best Mode for Carrying Out the Invention

Next, the present invention is explained in detail by way of Examples and Comparative Examples.

### 1. Preparation of rustproofing composition

### Example 1

Raw materials were mixed as shown in Table 1, and the mixture was heated to melting. Next, the mixture was agitated sufficiently by an agitator and was cooled to prepare the rustproofing composition of Example 1 of the present invention. In Tables 1 and 2, microcrystalline wax is a commercial product having a melting point of 87°C, calcium sulphonate is a oil-reduced product of basic alkylbenzene calcium salt, fatty acid ester is glycerin oleate, paraffin base lubricant base oil is a 500 neutral oil of a general commercial product, liquid paraffin is a common commercial product having kinematic viscosity of 70 mm²/s at 40°C. Calcium carbonate particles used in the Example have an average diameter of 0.1 µm. Bentonite having an average particle diamter of 3 µm was dispersed in solvent beforehand and was used. The other raw materials used in the Example were common commercial products.

### Examples 2 to 16 and Comparative Example 1 to 7

In the same manner as in Example 1, except that each contained amount of raw material was change to an amount shown in Tables 1 and 2, rustproofing compositions of Examples 2 to 16 and Comparative Examples 1 to 7 of the present invention were prepared.

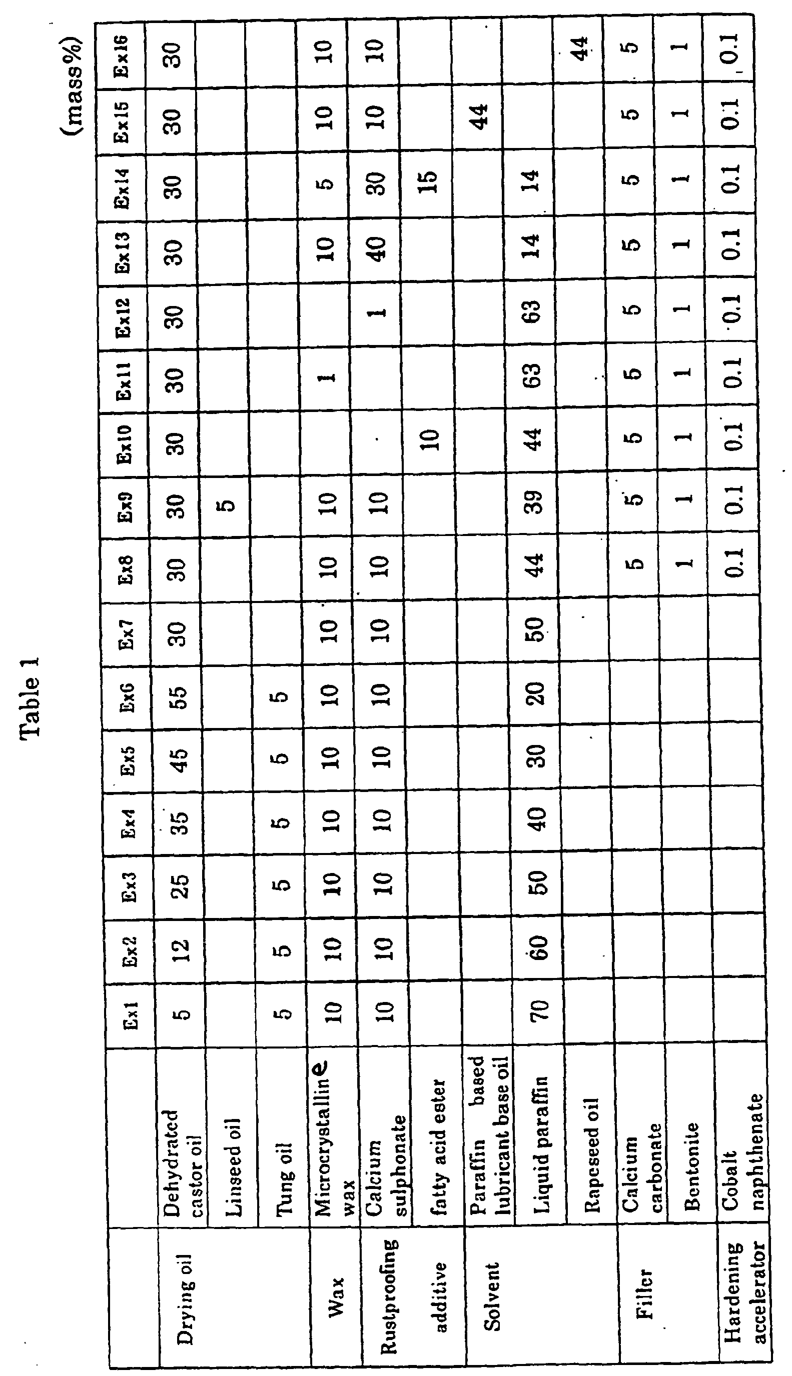

**Table 2**

| (mass%) | | | | | | | | |
|---|---|---|---|---|---|---|---|---|
| | | C.Ex 1 | C.Ex 2 | C.Ex 3 | C.Ex 4 | C.Ex 5 | C.Ex 6 | C.Ex 7 |
| Drying oil | Dehydrated castor oil | 5 | | 60 | 60 | 30 | 10 | 10 |
| | Linseed oil | | | | 5 | | | |
| | Tung oil | | 5 | 5 | | | | |
| Wax | Microcrystalline wax | 10 | 10 | 10 | 10 | | 10 | 10 |
| Rustproofing additive | Calcium sulphonate | 10 | 10 | 10 | 10 | | 45 | |
| | Fatty acid ester | | | | | | | 45 |
| Solvent | Paraffin based lubricant base oil | | | | | | | |
| | Liquid paraffin | 75 | 75 | 15 | 15 | 64 | 29 | 29 |
| | Rapeseed oil | | | | | | | |
| Filler | Calcium carbonate | | | | | 5 | 5 | 5 |
| | Bentonite | | | | | 1 | 1 | 1 |
| Hardening accelerator | Cobalt naphthenate | | | | | 0.1 | 0.1 | 0.1 |

### Comparative Examples 8 to 10

A conventional rustproofing composition (trade name: NOX-RUST HS-700, produced by PARKER INDUSTRIES, INC.) was used as a rustproofing composition of Comparative Example 8. Furthermore, a conventional high-solid rustproofing wax (trade name: NOX-RUST 117, produced by PARKER INDUSTRIES, INC.) was used as a rustproofing composition of Comparative Example 9. Furthermore, the solvent of NOX-RUST HS-700 of Comparative Example 8 was changed to a lubricant oil to prepare a rustproofing composition of Comparative Example 10.

### 2. Evaluation Tests

Each of the Examples and Comparative Examples prepared in the manner described above were examined as explained below, and the properties were evaluated. The results are shown in Tables 3 and 4.

### (1) Rustproofing ability (Salt spray test)

The oil on a surface of a cold rolled steel plate (JISG3141SPCC-SD) having dimensions of length 70 mm, width 150 mm, thickness 0.8 mm was removed by solvent and dried. The rustproofing compositions of the Examples and Comparative Examples were coated on the surface of the steel plate to have a thickness of 30 µm by using a barcoater and were dried for 1 week at normal temperature, and a salt spray test was performed for 360 hours. Observing the appearance of each steel plate, the time required for the occurrence of rust was measured. The rustproofing ability was evaluated. A rust occurrence time of more than 240 hours is Ⓞ, 120 to 240 hours is ○, 48 to 119 hours is Δ, and less than 48 hours is ×.

### (2) Condition of coated film after drying

The oil on a surface of a cold rolled steel plate (JISG3141SPCC-SD) having dimensions of length 70 mm, width 150 mm, thickness 0.8 mm was removed by solvent and dried. The rustproofing compositions of the Examples and Comparative Examples were coated to the surface of the steel plate to have a thickness of 30 µm by using a barcoater and were dried for 1 week at normal temperature, and they were evaluated for hardness of the coated film and stickiness of the coated film by touching with a finger. In the evaluation, the coated film having no stickiness is ○, having a little stickiness is Δ, and having much stickiness and sticking to the finger is ×. Furthermore, in the evaluation of hardness, a soft coating film having efficient flexibility is ○, and a coating which is too hard or too soft is ×.

### (3) Permeability

Two sheets of cold rolled steel plate (JISG3141SPCC-SD) having dimensions of length 70 mm, width 150 mm, and thickness 0.8 mm were bent in angle of 30° at 50 mm from an edge of the length direction, and the oil on these plates was removed by solvent, and this was dried. Opposite surfaces of bent edge parts of these steel plates were faced to each other and bound to form a Y-shape. At this time, a teflon spacer having a thickness of 100 µm was put in both edge parts in the width direction. Next, these were fixed by a clip to form a jig for evaluation of permeability. This jig was set up so that the bent parts were up. 1 ml of the rustproofing compositions of the Examples and Comparative Examples were put into gap of the steel plates in which spacer was put from the upper part, and this was allowed to stand for 24 hours. After that, the jig was dismantled to measure the permeated length. In the evaluation, the permeated length of not less than 30 mm is ○, and not more than 29 mm is ×. The atmosphere of the test, the jig, and the rustproofing compositions were kept at 10°C.

### (4) Heat-resistant dripping ability

The oil on a surface of a cold rolled steel plate (JISG3141SPCC-SD) having dimensions of length 70 mm, width 150 mm, and thickness 0.8 mm was removed by solvent and dried. The lower half part of the plate was masked, and the rustproofing compositions of each of the Examples and Comparative Examples were coated on the upper half part to have a thickness of 200 µm by a barcoater, and this was left for 1 week at normal temperature. Then the masking was pulled off, the plate was put in a drier in which the atmosphere was 80°C standing vertical and was left for 1 hour. Dripping of each Examples and Comparative Examples were measured. In the evaluation of heat-resistant dripping ability, the dripped length less than 10 mm is ○, 11 to 50 mm is Δ, and 51 mm or more is ×.

### (5) Coating workability

The rustproofing compositions of Examples and Comparative Examples were prepared to be 20°C, sprayed at a discharge pressure of 4.9 MPa on a chip having a bore diameter of 15/100 inches by an airless pump for coating. Discharging conditions were observed and evaluated. In the evaluation of coating workability, uniform atomization was obtained is ○, some what non-uniform is Δ, and non-uniform spotting is ×.

### (6) Paint staining

On a painted plate in which top painting for automobile was coated, the rustproofing compositions of the Examples and Comparative Examples were dripped by a dropping pipet. The plate was horizontally placed in a drier in which the atmosphere was 60°C for 1 hour, and was cooled at room temperature for 30 minutes. Next, the dripped rustproof composition was wiped by gauze containing solvent, and paint staining was evaluated. In the evaluation, ○: Not discolored and not swelled, Δ: Swelled, and ×: Swelled and discolored.

### (7) Drying time

The oil on surface of a cold rolled steel plate (JISG3141SPCC-SD) having dimensions of a length 70 mm, width 150 mm, and thickness 0.8 mm was removed by solvent and was dried. The rustproofing compositions of the Examples and Comparative Examples were coated to the surface of the steel plate to be 30 µm of coating thickness by using a barcoater, placed in a room at normal temperature, and drying conditions over time were evaluated by touching with a finger. In the evaluation, ○: Dried within 24 hours, Δ: Dried within a week, and ×: Not dried.

### (8) Nonvolatile content

By applying a testing method of nonvolatile content in the testing method of coating content JIS K5407-4, nonvolatile content in the Examples and Comparative Examples were measured, and were evaluated. In the evaluation, ○: Nonvolatile content is not less than 99%, Δ: Not less than 90%, and ×: Not more than 89%.

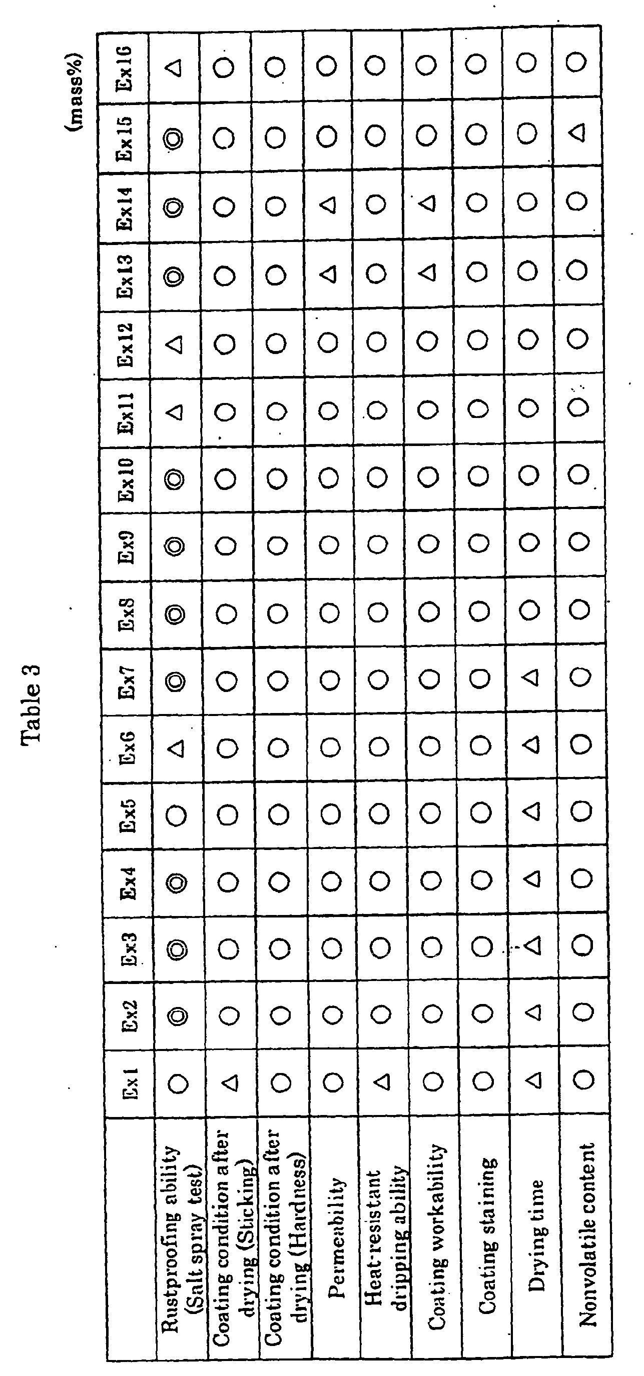

**Table 4**

| | C.Ex1 | C.Ex2 | C.Ex3 | C.Ex4 | C.Ex5 | C.Ex6 | C.Ex7 | C.Ex8 | C.Ex9 | C.Ex10 |
|---|---|---|---|---|---|---|---|---|---|---|
| Rustproofing ability (Salt spray test) | × | × | × | × | × | Ⓞ | Ⓞ | Ⓞ | Ⓞ | Δ |
| Coating condition after drying (Sticking) | × | × | ○ | ○ | ○ | Δ | Δ | ○ | ○ | × |
| Coating condition after drying (Hardness) | × × | × × | × × | × × | ○ ○ | ○ ○ | ○ ○ | ○ ○ | ○ ○ | × × |
| Permeability | ○ | ○ | ○ | ○ | ○ | × | × | ○ | × | ○ |
| Heat-resistant dripping ability | × | × | ○ | ○ | ○ | Δ | Δ | ○ | ○ | × |
| Coating workability | ○ | ○ | ○ | ○ | ○ | × | × | ○ | ○ | ○ |
| Coating staining | ○ | ○ | ○ | ○ | ○ | ○ | ○ | Δ | Δ | ○ |
| Drying time | × | × | ○ | ○ | ○ | ○ | ○ | ○ | ○ | × |
| Nonvolatile content | ○ | ○ | ○ | ○ | ○ | ○ | ○ | × | × | Δ |

As shown in Tables 3 and 4, the rustproofing compositions of Examples 1 to 16 of the present invention exhibit superior characteristics in every tested point, and there is no problem in practical use. In particular among these, the rustproofing compositions of Examples 8 to 10 were evaluated as not less than ○ in every tested point and it is clear that these compositions are extremely superior as rustproofing wax compositions which are good for the environment. However, Comparative Examples 1 and 2 in which the contained amount of drying oil is too low did not exhibit sufficient characteristics on the tested points of rustproofing ability, coating conditions after drying, heat-resistant dripping, and time required for drying. On the other hand, Comparative Examples 3 and 4 in which the contained amount of drying oil is too great, have problems in the tested points of rustproofing ability and coating hardness after drying. Furthermore, Comparative Example 5 in which the contained amount of wax and/or rustproofing additive are/is too low could not exhibit sufficient rustproofing ability, and on the other hand, Comparative Examples 6 and 7 in which the contained amount of wax and/or rustproofing additive are/is too much great problems in the tested points of permeability and coating workability. Furthermore, the rustproofing composition of the present invention can exhibit long-term rustproofing ability which is similar to that of Comparative Examples 8 and 9 which are rustproofing waxes containing conventional organic solvents, and that, in spite of the rustproof composition of the present invention being able to be used in the same method as in a conventional one, the volatile organic solvent content is low. Therefore, it became obvious that the invention is an efficient rustproofing composition which is good for environment and which can have superior effects with respect to global warming. Furthermore, in the present invention, rustproofing compositions having desirable characteristics can be prepared by changing the contained amount of drying oil, wax, and/or rustproofing additive.

As explained above, rustproofing compositions which are good for the environment having less than 10% of volatile organic solvent and exhibits efficient qualities of rustproofing ability and workability on parts for around tires, pocket structure parts, or plate-bonded parts by dissolving or dispersing the following elements:
10 to 60 mass% of the entirety of the composition of drying oil selected from at least one of oils and fats having an iodine value of not less than 130,
1 to 50 mass% of the entirety of the composition of waxes selected from at least one kind of natural waxes and synthetic waxes and/or rustproofing additives selected from at least one kind of sulfonates, carboxylic acid salts, fatty acid esters, amine salts, oxide paraffin salts, and oxide wax salts,
into at least one kind of solvent selected from mineral oil based lubricant base oil, synthetic lubricant oil base material, liquid saturated hydrocarbon mixture, vegetable oil based semi-drying oils and vegetable oil based non-drying oils. Furthermore, not only can the rustproofing composition of the present invention meet requirements for rustproofing ability for cars, which are becoming stringent recently, but it is also efficient from the viewpoint of cost performance compared to rustproofing wax containing conventional solvents which is difficult to use from the viewpoint of solvent control.

A rustproofing composition has 10 to 60 mass% of the entirety of the composition of drying oil having an iodine value of not less than 130, and 1 to 50 mass% of the entirety of the composition of specific waxes and/or rustproofing additives dissolved or dispersed in mineral oil based lubricant base oils, synthetic lubricant base materials or liquid saturated hydrocarbon mixtures.

## Claims

1. A rustproofing composition comprising:
at least one kind of drying oil selected from fats and oils having an iodine value of not less than 130 for 10 to 60 mass% of the entirety of the composition;
at least one kind of wax selected from natural waxes and synthetic waxes and/or at least one kind of rustproofing additive selected from sulfonates, carboxylic acid salts, fatty acid esters, amine salts, oxide paraffin salts, and oxide wax salts for 1 to 50 mass% of the entirety of the composition;
wherein the drying oil, the wax, and the rustproofing additive are dissolved or dispersed in at least one kind of solvent selected from mineral oil based lubricant base oils, synthetic lubricant oil base materials, liquid saturated hydrocarbon mixtures, vegetable oil based semi-drying oils, and vegetable oil based non-drying oils, and wherein nonvolatile content at 105°C for 3 hours is not less than 90 mass%.

2. A rustproofing composition comprising:
at least one kind of drying oil selected from fats and oils having an iodine value of not less than 130 for 10 to 60 mass% of the entirety of the composition;
at least one kind of wax selected from natural waxes and synthetic waxes and/or at least one kind of rustproofing additive selected from sulfonates, carboxylic acid salts, fatty acid esters, amine salts, oxide paraffin salts, and oxide wax salts for 1 to 50 mass% of the entirety of the composition;
wherein the drying oil, the wax, and the rustproofing additive are dissolved or dispersed in at least one kind of solvent selected from mineral oil based lubricant base oils, synthetic lubricant oil base materials, and liquid saturated hydrocarbon mixtures and wherein nonvolatile content at 105°C for 3 hours is not less than 90 mass%.

## Patentansprüche

1. Rostschutzzusammensetzung, umfassend:
mindestens eine Art Trockenöl, ausgewählt aus Fetten und Ölen mit einer Iodzahl von nicht weniger als 130, in 10 bis 60 Masse-% der gesamten Zusammensetzung;
mindestens eine Art Wachs, ausgewählt aus natürlichen Wachsen und synthetischen Wachsen und/oder mindestens eine Art Rostschutzadditiv, ausgewählt aus Sulfonaten, Carbonsäuresalzen, Fettsäureestern, Aminsalzen, Oxidparaffinsalzen und Oxidwachssalzen, in 1 bis 50 Masse-% der gesamten Zusammensetzung;
worin das Trockenöl, das Wachs und das Rostschutzadditiv gelöst oder dispergiert sind in mindestens einer Art Lösungsmittel, ausgewählt aus Schmierölen auf Mineralölbasis, Schmierölmaterialien auf synthetischer Basis, flüssigen Gemischen aus gesättigten Kohlenwasserstoffen, Halbtrockenöle auf Pflanzenölbasis und Nicht-Trockenöle auf Pflanzenölbasis, und worin der Anteil von nichtflüchtigen Bestandteilen nach 3 Stunden bei 105 °C nicht weniger als 90 Masse-% ist.

2. Rostschutzzusammensetzung, umfassend:
mindestens eine Art Trockenöl, ausgewählt aus Fetten und Ölen mit einer lodzahl von nicht weniger als 130, in 10 bis 60 Masse-% der gesamten Zusammensetzung;
mindestens eine Art Wachs, ausgewählt aus natürlichen Wachsen und synthetischen Wachsen und/oder mindestens eine Art Rostschutzadditiv ausgewählt aus Sulfonaten, Carbonsäuresalzen, Fettsäureestern, Aminsalzen, Oxidparaffinsalzen und Oxidwachssalzen, in 1 bis 50 Masse-% der gesamten Zusammensetzung;
worin das Trockenöl, das Wachs und das Rostschutzadditiv gelöst oder dispergiert sind in mindestens einer Art Lösungsmittel, ausgewählt aus Schmierölen auf Mineralölbasis, Schmierölmaterialien auf synthetischer Basis und flüssigen Gemischen aus gesättigten Kohlenwasserstoffen, und worin der Anteil von nichtflüchtigen Bestandteilen nach 3 Stunden bei 105 °C nicht weniger als 90 Masse-% ist.

## Revendications

1. Composition antirouille, comprenant :
au moins une sorte d'huile siccative choisie parmi les graisses et les huiles ayant un indice d'iode non inférieur à 130 pour 10 à 60 % en masse de la totalité de la composition ;
au moins une sorte de cire choisie parmi les cires naturelles et les cires synthétiques et/ou au moins une sorte d'additif antirouille choisi parmi les sulfonates, les sels d'acides carboxyliques, les esters d'acides gras, les sels d'amines, les sels de paraffine oxydés et les sels de cire oxydés pour 1 à 50 % en masse de la totalité de la composition ;
dans laquelle l'huile siccative, la cire et l'additif antirouille sont dissous ou dispersés dans au moins une sorte de solvant choisi parmi les huiles de base lubrifiantes à base d'huile minérale, les matières de base d'une huile lubrifiante synthétique, les mélanges d'hydrocarbures liquides saturés, les huiles semi-siccatives à base d'huile végétale, et les huiles non siccatives à base d'huile végétale, et dans laquelle la teneur en substances non volatiles à 105 °C pendant 3 heures n'est pas inférieure à 90 % en masse.

2. Composition antirouille, comprenant :
au moins une sorte d'huile siccative choisie parmi les graisses et les huiles ayant un indice d'iode non inférieur à 130 pour 10 à 60 % en masse de la totalité de la composition ;
au moins une sorte de cire choisie parmi les cires naturelles et les cires synthétiques et/ou au moins une sorte d'additif antirouille choisi parmi les sulfonates, les sels d'acides carboxyliques, les esters d'acides gras, les sels d'amines, les sels de paraffine oxydés et les sels de cire oxydés pour 1 à 50 % en masse de la totalité de la composition ;
dans laquelle l'huile siccative, la cire et l'additif antirouille sont dissous ou dispersés dans au moins une sorte de solvant choisi parmi les huiles de base lubrifiantes à base d'huile minérale, les matières de base d'une huile lubrifiante synthétique, et les mélanges d'hydrocarbures liquides saturés, et dans laquelle la teneur en substances non volatiles à 105 °C pendant 3 heures n'est pas inférieure à 90 % en masse.
